(19) Europäisches Patentamt

European Patent Office

Office européen des brevets

(11) **EP 0 857 610 B1**

(12) **EUROPÄISCHE PATENTSCHRIFT**

(45) Veröffentlichungstag und Bekanntmachung des Hinweises auf die Patenterteilung:
**29.10.2003 Patentblatt 2003/44**

(51) Int Cl.⁷: **B60Q 1/14**

(21) Anmeldenummer: **98101968.0**

(22) Anmeldetag: **05.02.1998**

(54) **Sensoreinrichtung und Verfahren für eine automatische Fahrlichtschaltung**

Sensor device and method for vehicle automatic lighting control

Dispositif de détection et procédé pour commander automatiquement l'éclairage d'un véhicule

(84) Benannte Vertragsstaaten:
**DE ES FR GB IT**

(30) Priorität: **06.02.1997 DE 19704413**

(43) Veröffentlichungstag der Anmeldung:
**12.08.1998 Patentblatt 1998/33**

(73) Patentinhaber: **Hella KG Hueck & Co.**
**59552 Lippstadt (DE)**

(72) Erfinder: **Boehlau, Christian**
**59558 Lippstadt (DE)**

(56) Entgegenhaltungen:
DE-A- 3 040 555       FR-A- 2 228 367
US-A- 2 944 188       US-A- 5 537 003

**Beschreibung**

Die Erfindung betrifft eine Sensoreinrichtung nach dem Oberbegriff des Patentanspruchs 1.

Die Erfindung betrifft weiterhin ein Verfahren nach dem Oberbegriff des Patentanspruchs 8.

Auf das prioritätsgleiche Patent EP-0 857 611 des Patentinhabers wird verwiesen.

Zur Unterstützung des Fahrers von Fahrzeugen sind automatische Fahrlichtschaltungen bekannt. Diese Systeme sollen z. B. folgende Unaufmerksamkeiten des Fahrers ausgleichen:

- Losfahren bei Dunkelheit ohne Licht, wie es bei gut ausgeleuchteten Straßen in der Stadt vorkommt,

- Dämmerungseinbruch während der Fahrt; eine Situation, in der oft erst sehr spät das Licht eingeschaltet wird, speziell auf wenig befahrenen Straßen, wo der Fahrer nicht durch andere beleuchtete Fahrzeuge darauf aufmerksam wird, dass das Licht einzuschalten ist,

- automatische Lichteinschaltung bei Einfahrt in einen Tunnel oder andere Dunkelstrecken, wenn vergessen wurde, das Licht einzuschalten.

Bei Unterschreiten eines bestimmten Helligkeitswertes der Umgebung soll das Fahrlicht eingeschaltet werden. Bei kurzen Dunkelstrecken, beispielsweise der Unterfahrung von kurzen Unterführungen oder Brücken soll ein unerwünschtes automatisches Einschalten des Fahrlichtes vermieden werden. Kurze Umfeldlichteinbrüche sollen daher erkannt bzw. nicht berücksichtigt werden.

Aus der DE 30 40 555 A1 ist eine Sensoreinrichtung bekannt, bei der eine Sammellinse mit einer optischen Achse einem Lichtempfangselement vorgelagert ist. Sammellinse und Lichtempfangselement sind in die Fahrtrichtung gerichtet, d. h., die Sensorachse des Lichtempfangselementes und die optische Achse der Sammellinse verlaufen etwa parallel zu einer Fahrzeuglängsachse. Bei der benötigten Empfindlichkeit des Lichtempfangselementes würde eine solche Sensoreinrichtung auch auf kurze Umfeldlichteinbrüche reagieren. Deshalb sind in der bekannten Sensoreinrichtung zusätzliche seitlich ausgerichtete Lichtempfangselemente bzw. Umfeldlichtsensoren vorgesehen. Nachteilig dabei ist, dass diese in einem Gehäuse angeordneten Lichtempfangselemente bzw. Sensoren aufeinander abgestimmt und die Lichteintrittsflächen senkrecht zu den vorgesehenen Lichteinstrahlungsrichtungen angeordnet sein müssen. Die Sensoreinrichtung ist in ihrem Aufbau dadurch kompliziert, teuer und zugleich voluminös. Zudem müssen die Umfeldlichtsensoren, deren Lichteintrittsflächen in entgegengesetzte Richtungen zeigen, quer zur Fahrtrichtung angeordnet werden, wodurch eine Anordnung der Sensoreinrichtung am Fahrzeug begrenzt bzw. erschwert wird.

Weiterhin ist aus der DE 37 20 406 A1 ein sogenannter Kompositlichtsensor bekannt, der mindestens zwei in einer Ebene nebeneinander angeordnete Lichtempfangselemente aufweist. Die Sensorachsen der Lichtempfangselemente verlaufen daher parallel zueinander. Durch unterschiedliche Lichteintrittsmittel, wie unterschiedliche Linsen, weisen die Lichtempfangselemente jeweils unterschiedliche optische Bedingungen, wie z. B. unterschiedliche Lichteinspeiswinkel auf. Bei dieser Sensoreinrichtung ist nachteilig, dass die optischen Achsen beider Lichtempfangselemente parallel zueinander verlaufen. Die vorgesehenen Lichteinstrahlungsrichtungen von Vorfeld- und Umfeldlicht müssen daher ebenfalls im wesentlichen parallel verlaufen. Die Lichteintrittsflächen dieser Sensoreinrichtung müssen daher etwa rechtwinklig zur Fahrzeuglängsachse angeordnet werden, was eine Anordnung der Sensoreinrichtung am Fahrzeug ebenfalls begrenzt bzw. erschwert, da schräge Glasflächen, wie Fahrzeugfrontscheiben oder Scheinwerferabdeckungen, schräg auftreffendes Licht ablenken.

Die Lichteintrittsflächen der bekannten Sensoreinrichtungen zur Umfeldlichtdetektierung können somit nicht ohne Messwertverfälschungen in einer vertikalen Ebene hinter in vertikaler Richtung aus aerodynamischen Gründen geneigten Glasflächen - beispielsweise einer Frontscheibe - angeordnet werden, da die geneigten transparenten Flächen eigene optische Wirkungen zeigen. Bei den bekannten Sensoreinrichtungen ist es insbesondere schwierig bzw. unmöglich, den Sensor bei schräg liegender Lichteintrittsfläche so anzuordnen, dass sein Maximum zur Detektierung in vertikaler Richtung liegt.

Aus der US 5 537 003 A (die dem Oberbegriff der Ansprüche 1 und 8 entspricht) ist eine Sensoreinrichtung für eine automatische Fahrlichtschaltung eines Fahrzeuges bekannt, die ein Lichtempfangselement und einen Lichtleiter aufweist, wobei der Lichtleiter das Umfeldlichtbündel von einer Fahrzeugfrontscheibe in Richtung des Lichtempfangselementes (1) weiterleitet. Der Lichtleiter ist hakenförmig ausgebildet und führt das Lichtbündel unter Umlenkung um einen spitzen Winkel zu einem Drehkopf mit einem Spiegel, der das Lichtbündel in vertikaler Richtung nach oben zu dem Lichtempfangselement reflektiert. Nachteilig an der Sensoreinrichtung ist der relativ große Bauraumbedarf.

Aufgabe der vorliegenden Erfindung ist es daher, eine gattüngsgemäße Sensoreinrichtung zur Umfeldlichtdetektierung zu schaffen, die einen geringen Raum beansprucht und kostengünstig herstellbar ist.

Diese Aufgabe wird erfindungsgemäß mit den Merkmalen des Patenanspruchs 1 gelöst.

Durch die Verwendung eines Lichtleiters mit einer in vertikaler Richtung gegenüber einer etwa horizontalen Fahrzeuglängsachse geneigten Lichteintrittsfläche kann auf eine rechtwinklige Anordnung der Lichteintrittsfläche verzichtet werden, so dass eine universelle Anordnung der Sensoreinrichtung möglich ist. Zugleich wird auch eine kompakte Bauform der Sensoreinrichtung verbunden mit einer kostengünstigen Herstellung und Montage ermöglicht. Die Sensoreinrichtung kann auch insbesondere von innen an eine Fahrzeugfrontscheibe oder eine geneigte Scheinwerferabdeckscheibe geklebt werden. Ein Verschmutzen der Sensoreinrichtung kann damit zuverlässig vermieden werden. Beispielsweise kann die Fahrzeugfrontscheibe als optisches Element in die Sensoreinrichtung integriert werden. Durch die vertikale Neigung der Lichteintrittsfläche gegenüber der Fahrzeuglängsachse wird vorteilhaft erreicht, dass Umfeldlicht mit einem Maximum in vertikaler Richtung in einem relativ großen Winkel detektiert werden kann.

Nach einer bevorzugten Ausführungsform weist der Lichtleiter an seinem der Lichteintrittsfläche benachbarten Bereich eine Verdickung auf. Durch die Verdickung im oberen Teil des Lichtleiters kann auch noch schräg einfallendes Licht in das Lichtleiterinnere gelangen.

Nach einer weiteren bevorzugten Ausführungsform ist der Lichtleiter an seiner Mantelfläche in einem der Lichtaustrittsfläche benachbarten Bereich mit einer Trägerplatte verbunden, die ihrerseits mit einem Gehäuse verbindbar ist. Der Lichtleiter ist mit seiner Lichteintrittsfläche mit einem Kleber von innen gegen die Frontscheibe eines Fahrzeuges so klebbar, dass die Lichteintrittsfläche etwa parallel zur Fahrzeugfrontscheibe verläuft. Dadurch ist eine besonders einfache Montage der Sensoreinrichtung möglich. Die Sensoreinrichtung kann zum Innenraum des Fahrzeuges hin vom Innenspiegel verdeckt werden und ist praktisch nicht sichtbar, bzw. für den Fahrer nicht störend platzierbar. Durch die Anordnung des Lichtleiters ist das Lichtempfangselement von außen praktisch nicht sichtbar.

Die Sensoreinrichtung zur Detektierung des Umfeldlichtes kann getrennt von einer Sensoreinrichtung zur Detektierung von Vorfeldlicht angeordnet werden. Beide Sensoreinrichtungen können aber auch vorteilhaft innerhalb eines Gehäuses angeordnet werden.

Nachteilig bei den bekannten Verfahren für eine automatische Fahrlichtschaltung ist, dass das zu detektierende Licht auf Lichteintrittsflächen fallen muss, die zur Hauptdetektionsrichtung senkrecht angeordnet sein müssen. Dadurch werden die bekannten Verfahren in ihren Einsatzmöglichkeiten begrenzt und die entsprechenden Sensoreinrichtungen sind schwierig zu montieren und sind nicht verschmutzungssicher. Weitere Aufgabe der Erfindung ist es daher, ein Verfahren für eine automatische Fahrlichtschaltung eines Fahrzeuges so zu verbessern, dass es durch eine gegenüber seiner Hauptdetektionsrichtung geneigte Lichteintrittsfläche universell einsetzbar und einfach und verschmutzungssicher montierbar ist.

Diese Aufgabe wird erfindungsgemäß mit den Merkmalen des Patentanspruchs 8 gelöst.

Dadurch, dass aus vertikaler Richtung einfallendes Umfeldlicht von einer in vertikaler Richtung geneigten Lichteintrittsfläche gebrochen und über einen Lichtleiter weitergeleitet wird, ist das Verfahren universell einsetzbar und eine geneigte Fahrzeugfrontscheibe ist als optisches Element in das Verfahren integrierbar, so dass die entsprechende Sensoreinrichtung einfach und verschmutzungssicher beispielsweise an die Rückseite der Fahrzeugfrontscheibe montierbar bzw. klebbar ist. Umfeldlicht und Vorfeldlicht können von getrennt angeordneten Sensoreinrichtungen bzw. Sensoren detektiert werden. Nach dem vorliegenden Verfahren ist es aber auch vorteilhaft möglich, die Sensoren für Umfeldlicht und Vorfeldlicht in einem gemeinsamen Gehäuse anzuordnen. Auch dadurch ist das vorliegende Verfahren universell einsetzbar.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

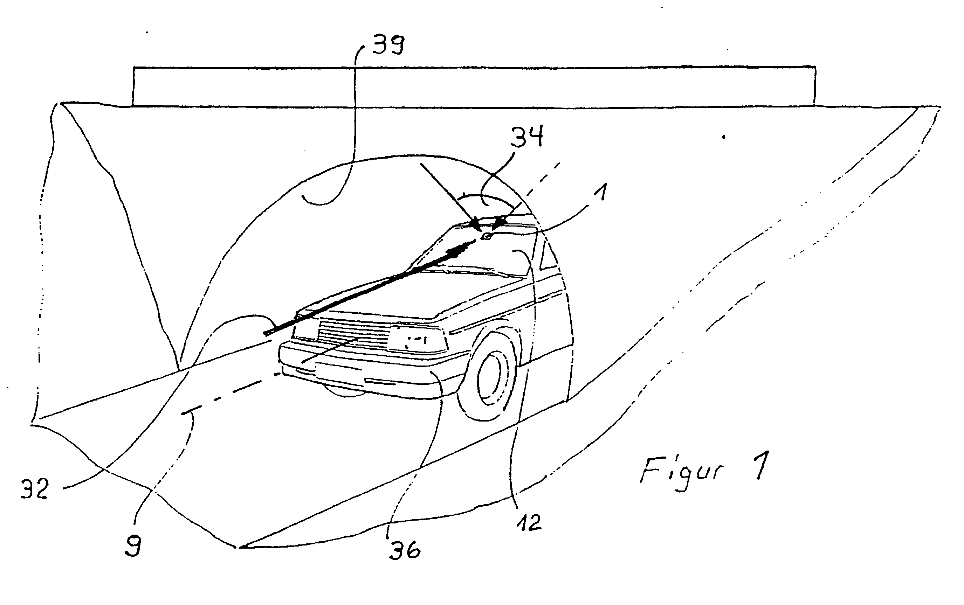

Figur 1: Eine räumliche Darstellung eines Fahrzeuges mit einer Sensoreinrichtung,

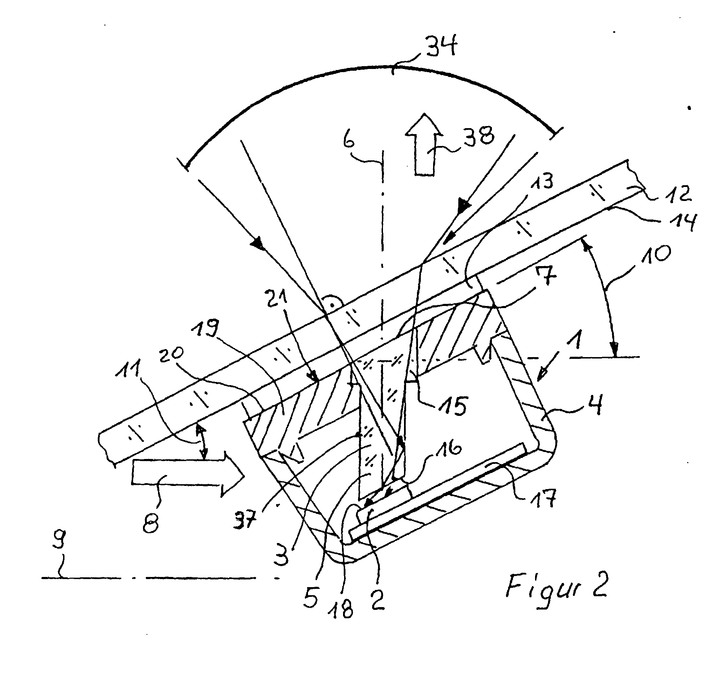

Figur 2: eine schematische Darstellung einer Sensoreinrichtung zur Umfeldlichtdetektierung in einer aufgeschnittenen Seitenansicht,

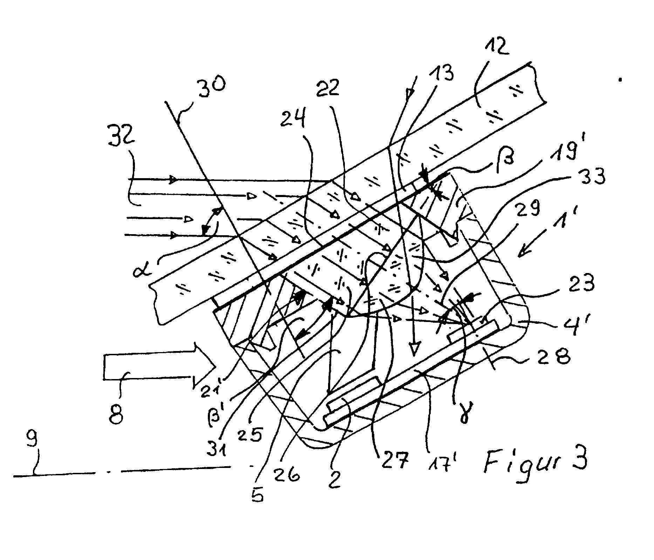

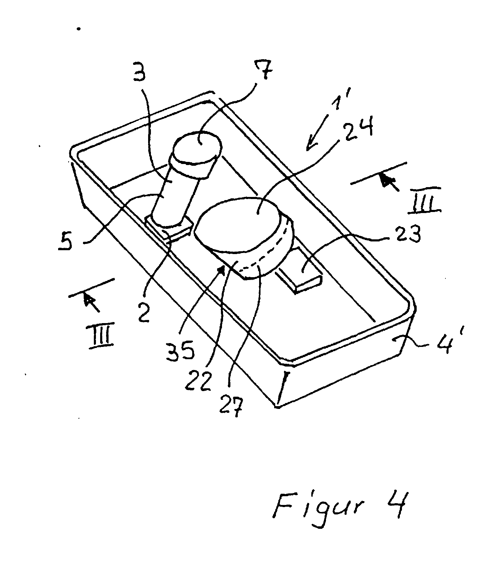

Figur 3: eine schematische Darstellung einer Sensoreinrichtung zur Vorfeldlichtdetektierung entlang der Linie III-III von Figur 4 geschnitten und

Figur 4: eine räumliche Darstellung einer Sensoreinrichtung zur Umfeldlichtdetektierung in Kombination mit einem Vorfeldlichtsensor ohne Trägerplatte.

Eine Sensoreinrichtung (1) besteht im wesentlichen aus einem Lichtempfangselement (2), einem optischen Element (3) und einem Gehäuse (4). Das Lichtempfangselement (2) ist als Halbleiterelement, beispielsweise als Siliciumdiode oder auch als geeigneter Sensorchip ausgebildet. Dem Lichtempfangselement (2) vorgelagert ist das optische Element (3), daß als Lichtleiter (5) ausgebildet ist. Der Lichtleiter (5) ist als zylindrischer Körper ausgebildet, dessen Längsachse (6) in vertikaler Richtung angeordnet ist. An seinem dem Lichtempfangselement (2) abgewandten Ende weist der Lichtleiter (5) eine Lichteintrittsfläche (7) auf. Die Lichteintrittsfläche (7) ist gegenüber einer Horizontalen (8) bzw. einer Fahrzeuglängsachse (9) um einen Neigungswinkel (10) geneigt. Der Neigungswinkel (10) der Lichteintrittsfläche (7) entspricht dem Neigungswinkel (11) der Fahrzeugfrontscheibe (12) gegenüber der Horizontalen (8). Die Sensoreinrichtung (1) ist mit einem Kleber (13) auf die einem Fahrzeuginnenraum zugewandte Rückseite (14) der Fahrzeugfrontscheibe (12) geklebt. In horizontaler Richtung verläuft die Lichteintrittsfläche (7) im wesentlichen quer zur Fahrzeuglängsachse (9). An seinem der Lichteintrittsfläche (7) benachbarten Bereich weist der Lichtleiter (5) eine Verdickung (15) auf. Durch die Verdickung (15) kann auch noch schräg einfallendes Licht in den Lichtleiter (5) gelangen und mit Hilfe von Totalreflektion zu einer der Lichteintrittsfläche (7) abgewandten Lichtaustrittsfläche (16) geleitet werden. Das an der Lichtaustrittsfläche (16) austretende Licht wird von dem der Lichtaustrittsfläche (16) benachbarten Lichtempfangselement (2) detektiert. Die Lichtaustrittsfläche (16) verläuft etwa parallel zur Lichteintrittsfläche (7). Das Lichtempfangselement (2) ist auf einer Platine (17) angeordnet. Die Platine (17) und das Lichtempfangselement (2) mit seiner Detektionsfläche (18) verlaufen ebenfalls etwa parallel zur Lichteintrittsfläche (7). Die Platine (17) ist in das Gehäuse (4) integriert. Der Lichtleiter (5) ist mit seiner Verdickung (15) in eine Trägerplatte (19) so eingebettet, daß die Lichteintrittsfläche (7) und die Außenfläche (20) der Trägerplatte (19) in einer Ebene liegen. Trägerplatte (19) und Lichtleiter (5) können somit als Terminal (21) ausgebildet sein, der mit dem hochtransparenten Kleber (13) gegen die Rückseite (14) der Fahrzeugfrontscheibe (12) geklebt wird. Die Brechungsindizes von Fahrzeugfrontscheibe (12), Kleber (13) und Lichtleiter (5) liegen nahe beieinander. Das Gehäuse (4) ist am Terminal (21) befestigbar. Die Verdickung (15) ist optional.

Nach einer anderen bevorzugten Ausführungsform weist die Sensoreinrichtung (1') ein zweites optisches Element (22) mit einem zweiten nachgeordneten Lichtempfangselement (23) auf. Das zweite optische Element (22) weist eine zweite Lichteintrittsfläche (24) auf, die in einer Ebene mit der Lichteintrittsfläche (7) angeordnet ist. Das zweite optische Element (22) besteht aus einem schräg angeschnittenen zylindrischen Körper (25), dessen schräg angeschnittene Fläche die zweite Lichteintrittsfläche (24) bildet und dessen der zweiten Lichteintrittsfläche (24) abgewandte Lichtaustrittsfläche (26) mit einer Sammeloptik (27) verbunden ist. Die Sammeloptik (27) ist als Plankonvexlinse ausgebildet. Sie kann aber auch als Fresnellinse oder als prismenartige Sammeloptik ausgebildet sein. Die Oberfläche des zweiten Lichtempfangselementes (23) ist etwa parallel zur zweiten Lichteintrittsfläche (24) des zylindrischen Körpers (25) angeordnet, so daß eine senkrecht zur Oberfläche des zweiten Lichtempfangselementes (23) angeordnete Sensorachse (28) und die optische Achse (29) der Sammeloptik (27) um einen Winkel γ, der dem von zweiter Lichteintrittsfläche (24) und zweiter Lichtaustrittsfläche (26) gebildeten Spitzenwinkel γ des zylindrischen Körpers (25) entspricht, geneigt sind. Grundsätzlich ist es aber auch möglich, die Oberfläche des zweiten Lichtempfangselementes (23) senkrecht zur optischen Achse (29) der Sammeloptik (27) anzuordnen, so daß die Sensorachse (28) mit der optischen Achse (29) zusammenfällt. Der Winkel γ wird zweckmäßigerweise zwischen 0° und ca. 50° betragen. Das Einfallslot (30) der zweiten Lichteintrittsfläche (24) bildet mit einer Parallelen zur Fahrzeuglängsachse (9) einen Einfallswinkel α. Parallel zur Fahrzeuglängsachse (9) auf die zweite Lichteintrittsfläche (24) auftreffendes Licht wird im zweiten optischen Element (22) zum Einfallslot (30) hin gebrochen und bildet mit dem Einfallslot (30) einen Ausfallswinkel β', der dem Spitzenwinkel β des zylindrischen Körpers (25) entspricht.

Zur zweiten Lichteintrittsfläche (24) hin wird die Mantelfläche (31) von der Trägerplatte (19') umgeben. Zweites optisches Element (22), optisches Element (3) und Trägerplatte (19') bilden einen Terminal (21'). Das zweite Lichtempfangselement (23) ist zusammen mit dem Lichtempfangselement (2) auf der Platine (17') angeordnet, die in das Gehäuse (4') integriert ist. Da die Brechungsindizes von Fahrzeugfrontscheibe (12), Kleber (13) und zweitem optischen Element (22) nahe beieinander liegen, gilt mindestens näherungsweise die Formel

$$\sin \beta = \frac{\sin \alpha}{n_{\text{Glas}}},$$

Wobei $n_{\text{Glas}}$ für den Brechungsindex von Terminal (21') und der Fahrzeugfrontscheibe (12) steht. Der Spitzenwinkel β des zweiten optischen Elementes (22) bzw. des zylindrischen Körpers (25) ergibt sich damit zwingend aus der Neigung der Fahrzeugfrontscheibe (12) gegenüber der Fahrzeuglängsachse (9). Die Sensoreinrichtung (1') ist im Bereich des Innenspiegels an die Fahrzeugfrontscheibe (12) geklebt. Die Sammeloptik (27) mit kurzer Brennweite verringert den Abstand zwischen zweiten Lichtempfangselement (23) und Sammeloptik (27), so daß die Sensoreinrichtung (1') eine kurze Bautiefe aufweist. Durch die Anordnung der Sensoreinrichtung (1') im Bereich der Fahrzeugfrontscheibe (12) wird zugleich erreicht, daß Licht von entgegenkommenden Fahrzeugen praktisch nicht zu einem unerwünschten Sensorsignal führt. Licht am Ende einer kurzen Dunkelheitsstrecke wird mit Hilfe der Sensoreinrichtung (1') bzw. des zweiten Lichtempfangselementes (23) und dem vorgeschalteten zweiten optischen Element (22) detektiert. Da das Sehziel klein im Verhältnis zum Abstandsquadrat (Abstand zwischen Sehziel und Kraftfahrzeug) ist, besitzt das zu detektierende Vorfeldlichtbündel (32) nur eine geringe Divergenz, es kann also als quasi paralleles Licht betrachtet werden. Durch die Einkoppelung des Vorfeldlichtbündels (32) in die Fahrzeugfrontscheibe (12) wird bereits eine erste Bündelung des Lichtes, d. h., eine Verminderung der Bündeldivergenz und eine Umlenkung erreicht, da die Fahrzeugfrontscheibe (12) normalerweise nicht senkrecht zur Fahr- bzw. Fahrzeuglängsachse (9) steht. Das Vorfeldlichtbündel (32) wird durch die Sammeloptik (27), die beispielsweise als asphärische Sammellinse (33) ausgebildet ist, auf das zweite Lichtempfangselement (23) fokussiert. Licht aus anderen Raumrichtungen, die nicht etwa parallel zur Fahrzeuglängsachse (9) verlaufen, fällt durch die erfindungsgemäße Anordnung nicht auf das zweite Lichtempfangselement (23). Das Umfeldlichtbündel (34), welches dem optischen Element (3) zugeführt wird, und das Vorfeldlichtbündel (32), welches dem zweiten optischen Element (22) zugeführt wird, werden von der Sensoreinrichtung (1') somit detektiert und zur Fahrlichtschaltung genutzt. Die Helligkeitssignale von Lichtempfangselement (2) und zweitem Lichtempfangselement (23) werden einer auf der Platine (17') angeordneten nicht dargestellten elektronischen Schaltung zugeführt, von dieser verglichen und ausgewertet und somit zur Fahrlichtschaltung genutzt. Bei ausreichendem Licht am Ende der kurzen Dunkelheitsstrecke unterbleibt ein automatisches Einschalten und bei nicht ausreichendem Licht wird das Fahrlicht durch ein Sensorsignal eingeschaltet.

Die Sensoreinrichtung (1) kann mit einem beliebigen geeigneten Sensor zur Messung des Vorfeldlichtbündels (32) zusammengeschaltet werden, der nicht notwendigerweise in dem Gehäuse (4) angeordnet sein muß. Ebenfalls kann der aus zweitem optischen Element (22) und zweitem Lichtempfangselement (23) bestehende Vorfeldlichtsensor (35) mit einem beliebigen geeigneten Umfeldlichtsensor zusammengeschaltet werden.

Die Sensoreinrichtung (1') hat jedoch den Vorteil, daß sie eine komplette kompakte Einheit bildet, die leicht und somit kostengünstig und zudem verschmutzungssicher von innen an eine Fahrzeugfrontscheibe (12) eines Fahrzeuges (36) montierbar ist.

**Patentansprüche**

1. Sensoreinrichtung (1, 1') zur Umfeldlichtdetektierung für eine automatische Fahrlichtschaltung eines Fahrzeuges, bei der in optisches Element (3) einem Lichtempfangselement (2) vorgelagert und zwischen letzterem und einer Fahrzeugfrontscheibe (12) angeordnet ist, wobei das optische Element (3) als Lichtleiter (5) ausgebildet ist, dessen dem Lichtempfangselement (2) abgewandte Lichteintrittsfläche (7) in vertikaler Richtung gegenüber einer horizontalen Fahrzeuglängsachse (9) so geneigt ist, dass ein aus vertikaler Richtung einfallendes Umfeldlichtbündel (34) so gebrochen wird, dass es an der der Lichteintrittsfläche (7) des Lichtleiters (5) abgewandten Lichtaustrittsfläche (16) austritt und auf ein der Lichtaustrittsfläche (16) benachbartes Lichtempfangselement (2) leitbar ist, **dadurch gekennzeichnet, dass** der Lichtleiter (5) zylindrisch ausgebildet ist und daß das Lichtempfangselement (2) parallel zur Lichteintrittsfläche (7) verläuft.

2. Sensoreinrichtung nach Anspruch 1, **dadurch gekennzeichnet, daß** der Lichtleiter (5) eine Längsachse (6) aufweist, die etwa in vertikaler Richtung angeordnet ist.

3. Sensoreinrichtung nach einem der Ansprüche 1 bis 2 **dadurch gekennzeichnet, daß** der Lichtleiter (5) an seinem der Lichteintrittfläche (7) benachbarten Bereich eine Verdickung (15) aufweist.

4. Sensoreinrichtung nach einem der Ansprüche 1 bis 3, **dadurch gekennzeichnet, daß** der Lichtleiter (5) an seiner Mantelfläche (37) in einem der Lichtrittsfläche (7) benachbarten Bereich mit einer Trägerplatte (19, 19') verbunden ist, die ihrerseits mit einem Gehäuse (4, 4') verbunden ist.

5. Sensoreinrichtung nach einem der Ansprüche 1 bis 4, **dadurch gekennzeichnet, daß** der Lichtleiter (5) mit seiner Lichteintrittsfläche (7) mit einem Kleber (13) von innen gegen die Fahrzeugfrontscheibe (12) eines Fahrzeuges (36) so geklebt ist, daß die Lichteintrittsfläche (7) etwa parallel zur Fahrzeugfrontscheibe (12) verläuft.

6. Sensoreinrichtung nach Anspruch 5, **dadurch gekennzeichnet, daß** die Brechungsindizes von Fahrzeugfrontscheibe (12), Kleber (13) und Lichtleiter (5) nahe beieinander liegen.

7. Sensoreinrichtung nach einem der Ansprüche 1 bis 6, **dadurch gekennzeichnet, daß** die Sensoreinrichtung (1') ein zweites optisches Element (22) mit einem zweiten nachgeordneten Lichtempfangselement (23) aufweist, wobei das zweite optische Element (22) zu dem zweiten Lichtempfangselement (23) hin mit einer Sammeloptik (27) verbunden ist und dessen der Sammeloptik (27) abgewandte zweite Lichteintrittsfläche (24) in vertikaler Richtung (38) gegenüber der Fahrzeuglängsachse (9) und der optischen Achse (29) der Sammeloptik (27) so geneigt ist, daß ein etwa parallel zu der Fahrzeuglängsachse (9) einfallendes Vorfeldlichtbündel (32) so gebrochen wird, daß es etwa parallel zur optischen Achse (29) der Sammelloptik (27) verläuft und von der Sammelloptik (27) auf das zweite Lichtempfangselement (23) fokussiert wird, wobei die zweite Lichteintrittsfläche (24) in einer Ebene mit der ersten Lichteintrittsfläche (7) angeordnet ist.

8. Verfahren für eine automatische Fahrlichtschaltung eines Fahrzeuges, bei dem von einer Sensoreinrichtung (1, 1') Umfeldlicht detektiert und von einer elektronischen Schaltung mit von einem Vorfeldlichtsensor detektierten Vorfeldlicht verglichen und zur Fahrlichtschaltung genutzt wird, wobei im wesentlichen ein aus vertikaler Richtung (38) durch eine Fahrzeugfrontscheibe (12) einfallendes Umfeldlichtbündel (34) von einer in vertikaler Richtung (38) geneigten Lichteintrittsfläche (7) der Sensoreinrichtung (1, 1') gebrochen und über einen Lichtleiter (5) auf ein Lichtempfangselement (2) geleitet und von dem Lichtempfangselement (2) detektiert wird, **dadurch gekennzeichnet, dass** der Lichtleiter (5) zylindrisch ausgebildet ist und daß das Lichtempfangselement (2) parallel zu der Lichteintrittsfläche (7) des Lichtleiters (5) angeordnet ist.

9. Verfahren nach Anspruch 8, **dadurch gekennzeichnet, daß** bei ausreichendem Vorfeldlicht (32) am Ende von kurzen Dunkelstrecken (39) ein automatisches Einschalten von Fahrlicht unterbleibt und bei nicht ausreichendem Vorfeldlicht (32) das Fahrlicht durch die elektronische Schaltung eingeschaltet wird.

## Claims

1. A sensor device (1, 1') for detecting ambient light for an automatic headlight circuit of a vehicle, in which an optical element (3) is positioned in front of a light detecting element (2) and is arranged between the latter and a vehicle windscreen (12), the optical element (3) taking the form of a light guide (5) the light input face (7) of which facing away from the light detecting element (2) is so inclined in the vertical direction with respect to a horizontal longitudinal axis (9) of the vehicle that an ambient light bundle incident (34) from the vertical direction is refracted in such a way that it is emitted from the light output face (16) facing away from the light input face (7) of the light guide (5) and is guidable on to a light detecting element (2) adjacent to the light output face (16), **characterised in that** the light guide (5) is cylindrical and **in that** the light detecting element (2) is disposed parallel to the light input face (7).

2. A sensor device according to Claim 1, **characterised in that** the light guide (5) has a longitudinal axis (6) disposed in approximately the vertical direction.

3. A sensor device according to either of claims 1 and 2, **characterised in that** the light guide (5) has a thickened portion (15) in its region adjacent to the light input face (7).

4. A sensor device according to any one of claims 1 to 3, **characterised in that** the light guide (5) is connected in a region of its lateral surface (37) adjacent to the light input face (7) to a carrier plate (19, 19') which in turn is connected to a housing (4, 4').

5. A sensor device according to any one of claims 1 to 4, **characterised in that** the light guide (5) is bonded with an adhesive (13) to the inner face of the windscreen (12) of a vehicle (36) by its light input face (7) in such a way that the light input face (7) is disposed approximately parallel to the vehicle windscreen (12).

6. A sensor device according to any Claim 5, **characterised in that** the refractive indices of the vehicle windscreen (12), the adhesive (13) and the light guide (5) lie close together.

7. A sensor device according to any one of claims 1 to 6, **characterised in that** the sensor device (1') includes a second optical element (22) downstream of the output of which is arranged a second light detecting element (23), the second optical element (22) being connected in the direction of the second light detecting element (23) to a collecting lens system (27) and its second light input face (24), facing away from the collecting lens system (27), being so inclined in the vertical direction (38) with respect to the longitudinal axis (9) of the vehicle and to the optical axis (29) of the collecting lens system (27) that a forward light bundle (32) incident approximately parallel to the longitudinal axis (9) of the vehicle is refracted in such a way that it runs approximately parallel to the optical axis (29) of the collecting lens system (27) and is focused by the collecting lens system (27) on to the second light detecting element (23), the second light input face (24) being arranged in one plane with the first light input face (7).

8. A method for an automatic headlight circuit of a vehicle, in which ambient light is detected by a sensor device (1, 1'), compared by an electronic circuit with forward light detected by a forward light sensor and utilised for switching the headlights, an ambient light bundle (34) incident from substantially the vertical direction (38) through a vehicle windscreen (12) being refracted by a light input face (7) of the sensor device (1, 1') inclined in the vertical direction (38), being guided via a light guide (5) on to a light detecting element (2) and being detected by the light detecting element (2), **characterised in that** the light guide (5) is cylindrical and **in that** the light detecting element (2) is arranged parallel to the light input face (7) of the light guide (5).

9. A method of according to Claim 8, **characterised in that** with sufficient forward light (32) at the end of short sections of darkness (39) automatic switching on of the headlights does not take place and with insufficient forward light (32) the headlights are switched on by the electronic circuit.

## Revendications

1. Dispositif de détection (1, 1') de la lumière environnante pour une commande automatique des phares d'un véhicule, dans lequel un élément optique (3) est agencé en amont d'un élément de réception de lumière (2) et entre ce dernier et un pare-brise de véhicule (12), l'élément optique (3) étant réalisé sous forme de guide de lumière (5) dont la surface d'entrée de lumière (7) détournée de l'élément de réception de lumière (2) est inclinée en direction verticale par rapport à un axe longitudinal (9) horizontal du véhicule de telle sorte qu'un faisceau de lumière environnante (34) tombant depuis une direction verticale est réfracté de telle sorte qu'il sort au niveau de la surface de sortie de lumière (16) détournée de la surface d'entrée de lumière (7) du guide de lumière (5) et qu'il peut être conduit sur un élément de réception de lumière (2) voisin de la surface de sortie de lumière (16), **caractérisé en ce que** le guide de lumière (5) est réalisé de forme cylindrique et **en ce que** l'élément de réception de lumière (2) s'étend parallèlement à la surface d'entrée de lumière (7).

2. Dispositif de détection selon la revendication 1, **caractérisé en ce que** le guide de lumière (5) présente un axe longitudinal (6) qui est agencé approximativement en direction verticale.

3. Dispositif de détection selon l'une des revendications 1 à 2, **caractérisé en ce que** le guide de lumière (5) présente un renflement (15) sur sa région voisine de la surface d'entrée de lumière (7).

4. Dispositif de détection selon l'une des revendications 1 à 3, **caractérisé en ce que** sur sa surface enveloppe (37), le guide de lumière (5) est relié dans une région voisine de la surface d'entrée de lumière (7) à une plaque support (19, 19') qui est elle-même reliée à un boîtier (4, 4').

5. Dispositif de détection selon l'une des revendications 1 à 4, **caractérisé en ce que** le guide de lumière (5) est collé avec sa surface d'entrée de lumière (7) par une colle (13) depuis l'intérieur contre le pare-brise (12) d'un véhicule (36) de telle sorte que la surface d'entrée de lumière (7) s'étend approximativement parallèlement au pare-brise (12) du véhicule.

6. Dispositif de détection selon la revendication 5, **caractérisé en ce que** les indices de réfraction du pare-brise (12) du véhicule, de la colle (13) et du guide de lumière (5) sont proches les uns des autres.

7. Dispositif de détection selon l'une des revendications 1 à 6, **caractérisé en ce que** le dispositif de détection (1') présente un deuxième élément optique (22) avec un deuxième élément de réception de lumière (23) monté en aval, le deuxième élément optique (22) étant relié, vers le deuxième élément de réception de lumière (23), à un système optique convergent (27) et dont la deuxième surface d'entrée de lumière (24), détournée du système optique convergent (27), est inclinée en direction verticale (38) par rapport à l'axe longitudinal (9) du véhicule et à l'axe optique (29) du système optique convergent (27) de telle sorte qu'un faisceau de lumière d'avant-plan (32) tombant approximativement parallèlement à l'axe longitudinal (9) du véhicule est réfracté de telle sorte qu'il s'étend approximativement parallèlement à l'axe optique (29) du système optique convergent (27) et qu'il est focalisé par le système optique convergent (27) sur le deuxième élément de réception de lumière (23), la deuxième surface d'entrée de lumière (24) étant agencée dans un plan avec la première surface d'entrée de lumière (7).

8. Procédé pour une commande automatique des phares d'un véhicule dans lequel de la lumière environnante est détectée par un dispositif de détection (1, 1') et comparée par un circuit électronique avec une lumière d'avant-plan détectée par un détecteur de lumière d'avant-plan et exploitée pour commander les phares, un faisceau de lumière environnante (34) tombant sensiblement depuis une direction verticale (38) à travers un pare-brise (12) de véhicule étant réfracté par une surface d'entrée de lumière (7) du dispositif de détection (1, 1'), qui est inclinée en direction verticale (38), et est conduit via un guide de lumière (5) sur un élément de réception de lumière (2) et est détecté par l'élément de réception de lumière (2), **caractérisé en ce que** le guide de lumière (5) est réalisé de forme cylindrique et **en ce que** l'élément de réception de lumière (2) est agencé parallèlement à la surface d'entrée (7) du guide de lumière (5).

9. Procédé selon la revendication 8, **caractérisé en ce que** lorsque la lumière d'avant-plan (32) est suffisante à la fin de trajets courts dans l'obscurité (39), un allumage automatique des phares ne se produit pas et, lorsque la lumière d'avant-plan (32) n'est pas suffisante, les phares sont allumés par la commande électronique.

Figur 1

EP 0 857 610 B1

Figur 2

Figur 3

Figur 4